# EUROPÄISCHE PATENTANMELDUNG

(11) **EP 0 704 597 A2**
(43) Veröffentlichungstag der Anmeldung: **03.04.1996**
(21) Anmeldenummer: 95115075.4
(22) Anmeldetag: 25.09.1995
(51) Int. Cl.: E06B 7/22

(54) **Dichtungsanordung für eine bewegliche Fensterscheibe**

(30) Priorität: 30.09.1994 DE 4435088
(71) Anmelder: METZELER Automotive Profiles GmbH, D-88131 Lindau (DE)
(72) Erfinder: Brühl, Gisbert, D-30916 Isernhagen (DE); Krause, Fritz, D-88239 Wangen (DE)
(74) Vertreter: Preissner, Nicolaus, Dipl.-Ing.

(57) **Zusammenfassung**

Eine Dichtungsanordnung (10) für eine bewegliche Fensterscheibe (12), insbesondere für eine Seitenscheibe eines Kraftfahrzeuges, die in einem Fensterrahmen (15) geführt und in einen zugeordneten Fensterschacht (13) einfahrbar ist, weist eine am Fensterrahmen (15) festgelegte extrudierte Rahmendichtung (10a) und eine im Bereich der Fensterschachtöffnung (13a) angeordnete extrudierte Fensterschachtdichtung (10b) auf. Um gegenüber bekannten, aus Einzelteilen hergestellten Dichtungsanordnungen die optische Erscheinung bei einfacher und kostengünstiger Herstellung zu verbessern, wird die einteilige Ausbildung der Dichtungsanordnung (10) vorgeschlagen, wobei ein gemeinsames Grundprofil für die Rahmendichtung (10a) und die Fensterschachtdichtung (10b) vorgesehen ist. Bereichsweise sind an dem Grundprofil Lippen (27, 28) vorgesehen. Im Bereich einer Fensterschachtöffnung (13a) ist eine Aussparung (30) in den Basisbereich (17) eingebracht.

## Beschreibung

Die Erfindung betrifft eine Dichtungsanordnung für eine bewegliche Fensterscheibe, insbesondere für eine Seitenscheibe eines Kraftfahrzeuges, die in einem Fensterrahmen geführt und in einen zugeordneten Fensterschacht einfahrbar ist, mit einer am Fensterrahmen festgelegten extrudierten Rahmendichtung, die an der Innen- und Außenseite elastisch anliegende Dichtungsteile aufweist und mit einer extrudierten Fensterschachtdichtung, die im Bereich einer Fensterschachtöffnung angeordnet ist und an der Innen- und Außenseite der Fensterscheibe anliegende elastische Dichtungsteile aufweist.

Einer derartige Dichtungsanordnung kommt neben der Funktion der Abdichtung der Fensterscheibe auch die Funktion des Führens der Fensterscheibe zu. Die bisher bekannten Dichtungsanordnungen besitzen einen mehrteiligen Aufbau. Die Einzelteile der Dichtungsanordnung sind als Extrusionsprofile hergestellt und über Steckverbindungen oder Vulkanisation miteinander verbunden. Bei Steckverbindungen kann es durch toleranzbedingte Abweichungen zur Spaltbildung kommen. Dies führt zu einer unregelmäßigen Oberfläche, die das Erscheinungsbild beeinträchtigt. Bei der Vulkanisation der einzelnen Dichtungsteile ist ein zusätzlicher Arbeitsgang erforderlich, wodurch die Herstellungskosten erhöht sind. Darüberhinaus treten bei einer Vulkanisation unerwünschte Glanzgradunterschiede, Einfallstellen durch Vulkanisationsformen und Probleme bei der Stoßhaftung auf. Weiterhin ist häufig eine Nachbeflockung notwendig.

Der Erfindung liegt die Aufgabe zugrunde, eine Dichtungsanordnung vorzuschlagen, bei der keine Beeinträchtigungen der optischen Erscheinung auftreten und die einfach und kostengünstig herstellbar ist.

Zur Lösung dieser Aufgabe wird bei einer Dichtungsanordnung der eingangs genannten Art vorgeschlagen, daß die Dichtungsanordnung einteilig ausgebildet ist, wobei ein gemeinsames Grundprofil für die Rahmendichtung und die Fensterschachtdichtung vorgesehen ist, an dem bereichsweise Lippen vorgesehen sind und im Bereich der Fensterschachtdichtung eine Aussparung für die Fensterschachtöffnung eingebracht ist.

Durch die einteilige Ausbildung der Dichtungsanordnung entfällt die bisher notwendige Verbindung der Dichtungsteile durch Steckverbindung oder Vulkanisation. Hierdurch wird ohne einen zusätzlichen Arbeitsgang eine einheitliche Oberfläche und somit ein gutes Erscheinungsbild erreicht. Die bei der Verbindung der Einzelteile auftretenden Probleme treten somit bei der erfindungsgemäßen Dichtungsanordnung nicht auf.

Bei der erfindungsgemäßen Dichtungsanordnung ist ein spezielles Grundprofil vorgesehen, das sowohl im Bereich der Rahmendichtung als auch im Bereich der Fensterschachtdichtung vorliegt. Dieses gemeinsame Grundprofil weist an der Innen- und Außenseite der beweglichen Fensterscheibe elastisch anliegende Dichtungsteile auf. Im Bereich der Fensterschachtdichtung ist in das Grundprofil eine Aussparung für die Fensterschachtöffnung eingebracht. Hierdurch wird eine innere und eine äußere Fensterschachtabdichtung erzielt. Vorzugsweise wird diese Aussparung nach der Extrusion der Dichtungsanordnung ausgestanzt. Bereichsweise sind an dem Grundprofil Lippen vorgesehen, die entsprechend der jeweiligen Funktion ausgebildet sind.

Vorteilhafte Ausgestaltungen der Erfindung sind in den Unteransprüchen aufgeführt.

Vorteilhaft weist das Grundprofil einen Basisbereich und im Querschnitt jeweils näherungsweise U-förmig ausgebildete, beabstandete Aufnahmeschenkel auf, die an zugeordneten Karosserieflanschen festlegbar sind. Um eine sichere Fixierung der Aufnahmeschenkel an den Karosserieflanschen zu gewährleisten, sind zweckmäßig die Aufnahmeschenkel mit U-förmig ausgebildeten Metalleinlagen versehen.

Vorteilhaft weist das Grundprofil ein an der Innenseite der Fensterscheibe anliegendes Dichtungsteil mit einer Hohlkammer auf. Hierdurch wird sowohl im Bereich der Rahmendichtung als auch im Bereich der Fensterschachtdichtung neben einer guten Abdichtung auch eine gute und problemfreie Führung der verstellbaren Fensterscheibe erreicht.

Im Bereich des Fensterschachtes kann das Grundprofil mit einer an der Außenseite der Fensterscheibe elastisch anliegenden Abstreiferlippe versehen sein. Diese Abstreiferlippe ist vorzugweise mit spitzem Winkel an die Oberseite der Fensterscheibe geführt, so daß kein Spalt auftreten kann, in dem sich Schmutz oder Staub ablagern kann. Hierdurch können insbesondere Kratzer auf der Fensterscheibe und/oder Quietschgeräusche bei laufender Fensterscheibe vermieden werden.

Weiterhin kann im Bereich des Fensterschachtes an dem Grundprofil eine seitlich abragende Abdecklippe vorgesehen sein, die einen Spalt zu einer inneren Abdeckung überdeckt.

In weiterer Ausgestaltung weist der Basisbereich eine elastisch abragende Lippe auf.

Vorteilhaft ist die Dichtungsanordnung aus einem extrusionsfähigen Elastomer hergestellt.

Nachfolgend wird die Erfindung anhand eines Ausführungsbeispieles näher beschrieben, das in schematischer Weise in der Zeichnung dargestellt ist. Hierin zeigen:
- Fig. 1: eine Seitenansicht einer Vordertür eines Fahrzeuges mit einer Ausführungsform einer erfindungsgemäßen Dichtungsanordnung und
- Fig. 2: den Schnitt längs der Linie II-II gemäß Fig. 1.

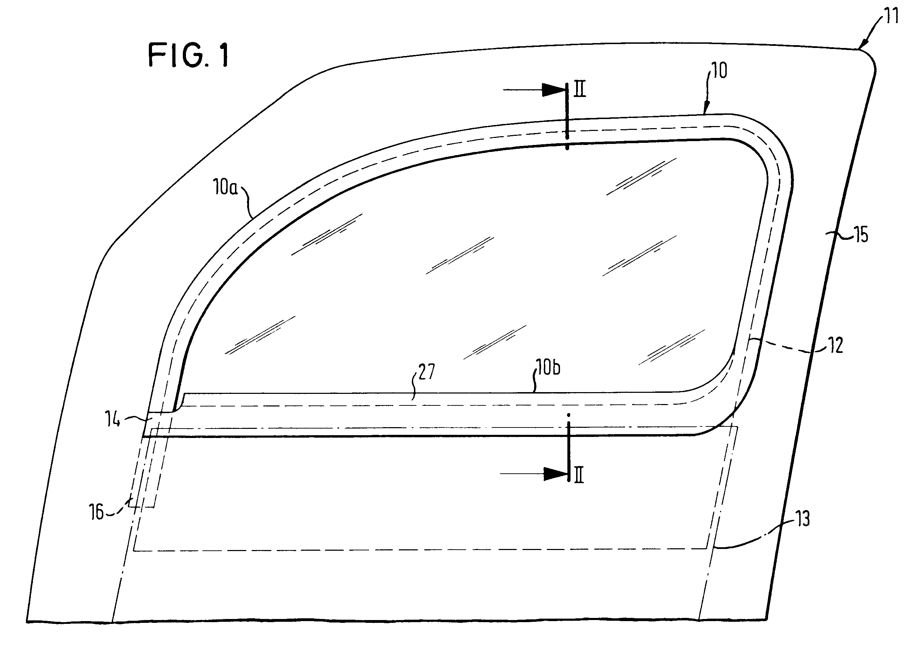

Die in Fig. 1 in Seitenansicht dargestellte Dichtungsanordnung 10 ist für eine Vordertür 11 eines nicht dargestellten Kraftfahrzeuges ausgelegt. Diese Vordertür 11 weist eine beweglich geführte Fensterscheibe 12 auf, die in einem an der Vordertür 11 vorgesehenen Fensterschacht 13 versenkbar ist.

Die Dichtungsanordnung 10 dient in prinzipiell bekannter Weise der-Abdichtung der Fensterscheibe 12 gegenüber dem Fensterrahmen 15 und dem Fensterschacht 16.

Die durch Extrusion hergestellte Dichtungsanordnung 10 liegt als Rahmen vor. Im Bereich der nicht dargestellten A-Säule, des Daches und der B-Säule des Fahrzeuges ist die Dichtungsanordnung 10 als Rahmendichtung 10a ausgebildet. Im Bereich des Fensterschachtes 13 ist die Dichtungsanordnung 10 als Fensterschachtdichtung 10b ausgebildet. In diesem Bereich weist die Dichtungsanordnung 10 eine Abstreiferlippe 27 auf, die sich im wesentlichen von der A-Säule bis zur B-Säule erstreckt. Optional kann diese Lippe auch bis in den Dachbereich geführt sein. An einem Überlappungsbereich 14 ist die Rahmendichtung 10a mit der Fensterschachtdichtung 10b verbunden. Wie aus Fig. 1 ersichtlich ist, ist der Überlappungsbereich 14 mit Abstand zu einem freien Ende 16 der Rahmendichtung 10a angeordnet.

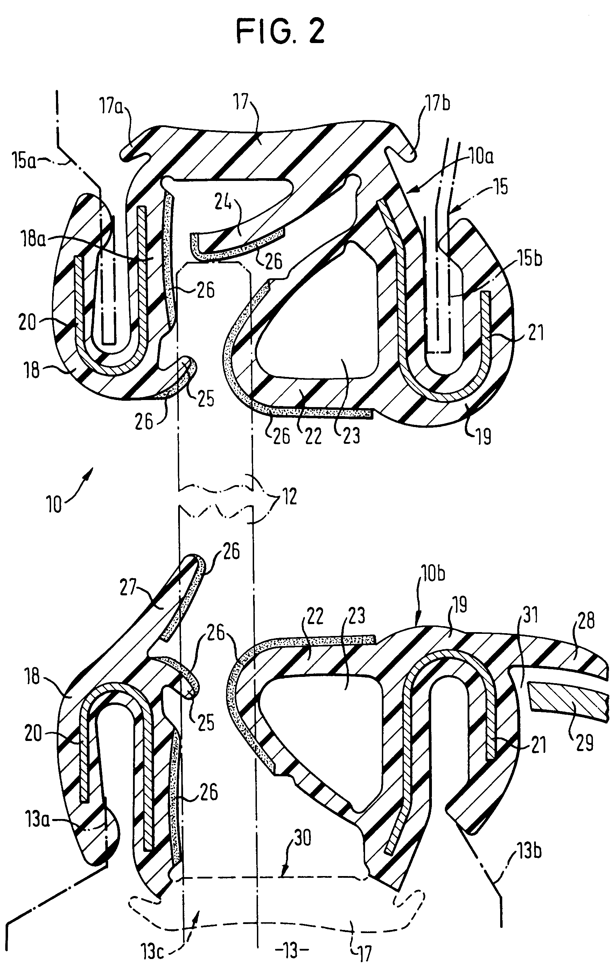

Die detaillierte Ausgestaltung der Dichtungsanordnung 10 soll nun mit Bezugnahme auf Fig. 2 näher beschrieben werden, die einen Schnitt längs der Linie II-II gemäß Fig. 1 zeigt. Wie aus Fig. 2 hervorgeht, liegt die Dichtungsanordnung 10 als Profildichtung vor, die ein gemeinsames Grundprofil für die Rahmendichtung 10a und die Fensterschachtdichtung 10b aufweist. Dieses gemeinsame Grundprofil wird im wesentlichen durch einen Basisbereich 17 und hiervon abragende Aufnahmeschenkel 18 und 19 gebildet. Die Aufnahmeschenkel 18, 19 weisen jeweils einen näherungsweise U-förmigen Querschnitt auf. Die Aufnahmeschenkel 18, 19 dienen der Festlegung an Flanschen 15a, 15b des Fensterrahmens 15. Um eine sichere Festlegung zu gewährleisten, ist innerhalb der Aufnahmeschenkel 18, 19 jeweils eine Metalleinlage 20, 21 vorgesehen, die ebenfalls einen näherungsweise U-förmigen Querschnitt aufweist.

Die Seiten des Basisbereiches 17 sind mit Rastnasen 17a, 17b versehen, die zugeordnete Fenterrahmenteile hintergreifen und ebenfalls der sicheren Fixierung der Rahmendichtung 10a dienen.

Von dem äußeren Aufnahmeschenkel 18 ragt eine elastische Lippe 25 ab, die an der Außenseite der Fensterscheibe 12 anliegt. An der Innenseite der Fensterscheibe 12 liegt ein Hohlkammer-Dichtteil 22 an, das mit dem inneren Aufnahmeschenkel 19 eine Hohlkammer 23 bildet. Die an der Fensterscheibe 12 anliegende elastische Lippe 25 und das Hohlkammerdichtteil 22 sind außenseitig mit einer Beflockung 26 versehen. Ebenfalls ist der äußere Aufnahmeschenkel 18 an einem der Fensterscheibe 12 gegenüberliegenden Bereich 18a mit einer Beflockung 26 versehen. In prinzipiell bekannter Weise dient die Beflockung 26 der Reibungsverminderung zwischen den an der Fensterscheibe 12 anliegenden Dichtteilen.

In einem der Fensterscheibe 12 zugewandten Bereich ragt von dem Basisbereich 17 eine elastische Lippe 24 ab, die ebenfalls in einem der Fensterscheibe 12 zugewandten Bereich mit einer Beflockung 26 versehen ist. Die elastische Lippe 24 dient der seitlichen Führung der Fensterscheibe 12.

Im Bereich des Fensterschachtes 13, der gemäß Fig. 2 untenliegend angeordnet ist, ist die Dichtungsanordnung 10 abweichend ausgebildet. Dies hängt mit der abweichenden Funktion in diesem Bereich der Dichtungsanordnung 10 zusammen. Zunächst ist im Bereich einer Fensterschachtöffnung 13a eine Aussparung 13 vorgesehen, die durch Herausstanzen des Basisbereiches 17 erreicht wird. Somit liegt der Basisbereich 17 im Bereich der Fensterschachtöffnung 13a nicht vor.

An dem äußeren Aufnahmeschenkel 18 ist die elastisch an der Fensterscheibe 12 anliegende Abstreiferlippe 27 vorgesehen. Innenseitig ist die Abstreiferlippe 27 mit einer Beflockung 26 versehen. Die Abstreiferlippe 27 ist derartig ausgestaltet, daß ein Schmutz oder Staub aufnehmender Spalt zwischen der Abstreiferlippe 27 und der Fensterscheibe 12 vermieden wird.

Im Bereich einer inneren Abdeckung 29 ragt von dem inneren Aufnahmeschenkel 19 eine Abdecklippe 28 ab, die einen Spalt 31 überdeckt.

Im übrigen ist die Fensterschachtdichtung 10b identisch wie die Rahmendichtung 10a ausgebildet. In prinzipiell ähnlicher Weise dient der äußere Aufnahmeschenkel 18, der mit einer U-förmigen Metalleinlage 20 versehen ist, der Festlegung an einen Flansch 13a des Fensterschachtes 13. An einen innenliegenden Flansch 13b ist der innere Aufnahmeschenkel 19, der mit einer U-förmigen Metalleinlage 21 versehen ist, festgelegt.

Das gemeinsame Grundprofil der Dichtungsanordnung 10 ist aus einem Elastomer extrudiert. Nach der Extrusion erfolgt das Ausstanzen der Aussparung 30 und das Biegen der Radien. Hierbei kann insbesondere ein Rollbiegeverfahren zum Einsatz kommen.

## Patentansprüche

1. Dichtungsanordnung (10) für eine bewegliche Fensterscheibe (12), insbesondere für eine Seitenscheibe eines Kraftfahrzeuges, die in einem Fensterrahmen (15) geführt und in einen zugeordneten Fensterschacht (13) einfahrbar ist, mit einer am Fensterrahmen (15) festgelegten extrudierten Rahmendichtung (10a), die an der Innen- und Außenseite elastisch anliegende Dichtungsteile (22, 25) aufweist und mit einer extrudierten Fensterschachtdichtung (10b), die im Bereich einer Fensterschachtöffnung (13a) angeordnet ist und an der Innen- und Außenseite der Fensterscheibe (12) anliegende elastische Dichtungsteile (22, 25, 27) aufweist, dadurch gekennzeichnet, daß die Dichtungsanordnung (10) einteilig ausgebildet ist, wobei ein gemeinsames Grundprofil für die Rahmendichtung (10a) und die Fensterschachtdichtung (10b) vorgesehen ist, an dem bereichsweise Lippen (27, 28) vorgesehen sind und im Bereich der Fensterschachtdichtung (10b) eine Aussparung (30) für die Fensterschachtöffnung (13c) eingebracht ist.

2. Dichtungsanordnung nach Anspruch 1, dadurch gekennzeichnet, daß das Grundprofil einen Basisbereich (17) und im Querschnitt jeweils näherungsweise U-förmig ausgebildete, beabstandete Aufnahmeschenkel (18, 19) aufweist, die an zugeordneten Karosserieflanschen (13a, 13b, 15a, 15b) festlegbar sind.

3. Dichtungsanordnung nach Anspruch 2, dadurch gekennzeichnet, daß die Aufnahmeschenkel (18, 19) mit U-förmig ausgebildeten Metalleinlagen (20, 21) versehen sind.

4. Dichtungsanordnung nach einem der Ansprüche 1 bis 3, dadurch gekennzeichnet, daß das Grundprofil eine durch die eingebrachte Aussparung erzielte innere und äußere Fensterschachtabdichtung aufweist.

5. Dichtungsanordnung nach einem der Ansprüche 1 bis 4, dadurch gekennzeichnet, daß das Grundprofil ein an der Innenseite der Fensterscheibe (12) anliegendes Dichtungsteil mit einer Hohlkammer (23) aufweist.

6. Dichtungsanordnung nach einem der Ansprüche 1 bis 5, dadurch gekennzeichnet, daß im Bereich des Fensterschachtes (13) das Grundprofil mit einer an der Außenseite der Fensterscheibe (12) elastisch anliegenden Abstreiferlippe (27) versehen ist.

7. Dichtungsanordnung nach einem der Ansprüche 1 bis 6, dadurch gekennzeichnet, daß im Bereich des Fensterschachtes (13) an dem Grundprofil eine seitlich abragende Abdecklippe (28) vorgesehen ist, die einen Spalt (31) zu einer inneren Abdeckung (29) überdeckt.

8. Dichtungsanordnung nach einem der Ansprüche 1 bis 7, dadurch gekennzeichnet, daß der Basisbereich (17) eine elastisch abragende Lippe (24) aufweist.

9. Dichtungsanordnung nach einem der Ansprüche 1 bis 8, dadurch gekennzeichnet, daß die Dichtungsanordnung (10) aus einem extrusionsfähigen Elastomer hergestellt ist.
